(19) Europäisches Patentamt
European Patent Office
Office européen des brevets

(11) **EP 1 202 036 B1**

## (12) FASCICULE DE BREVET EUROPEEN

(45) Date de publication et mention
de la délivrance du brevet:
**15.04.2009 Bulletin 2009/16**

(51) Int Cl.:
***G01L 23/22*** *(2006.01)*

(21) Numéro de dépôt: **01402703.1**

(22) Date de dépôt: **18.10.2001**

(54) **Methode de localisation d'un cliquetis**

Verfahren zur Lokalisierung des Klopfens in Verbrennungsmotoren

Method for localising knocking in internal combustion engines

(84) Etats contractants désignés:
**AT BE CH CY DE DK ES FI FR GB GR IE IT LI LU MC NL PT SE TR**

(30) Priorité: **31.10.2000 FR 0014085**

(43) Date de publication de la demande:
**02.05.2002 Bulletin 2002/18**

(73) Titulaire: **Institut Français du Pétrole**
**92852 Rueil-Malmaison Cedex (FR)**

(72) Inventeurs:
• **Castagne, Michel**
**91120 Palaiseau (FR)**
• **Henriot, Stéphane**
**92500 Rueil-Malmaison (FR)**
• **Monnier, Gaétan**
**78955 Carrières sous Poissy (FR)**

(56) Documents cités:
**DE-A- 3 046 603          FR-A- 2 433 104**

• **R. HICKLING ET AL.: "CAVITY RESONANCES IN ENGINE COMBUSTION CHAMBERS AND SOME APPLICATIONS" JOURNAL OF THE ACOUSTICAL SOCIETY OF AMERICA., vol. 73, no. 4, avril 1983 (1983-04), pages 1170-1178, XP002171060 AMERICAN INSTITUTE OF PHYSICS. NEW YORK., US ISSN: 0001-4966**

**Description**

La présente invention concerne une méthode d'analyse de la provenance du cliquetis sur un moteur à combustion, généralement à allumage commandé. L'objet de cette méthode est de permettre, à partir de mesures d'un paramètre relatif à la combustion, par exemple la pression dans la chambre de combustion, de localiser le point de départ d'un cliquetis pendant chaque cycle moteur et sur chaque cylindre. La présente invention autorise donc une évaluation statistique des lieux les plus fréquents d'apparition du cliquetis pour une configuration moteur et des paramètres de combustion déterminés.

On rappelle que le terme de cliquetis désigne une auto-inflammation plus ou moins brutale d'une partie de la charge air-carburant avant l'arrivée du front de flamme issu de l'allumage par la bougie. Cette auto-inflammation, non désirée, dans le cas des moteurs à allumage commandé, conduit à une augmentation locale de la pression suivie d'une vibration de la masse gazeuse aux fréquences propres de la chambre de combustion. Un tel phénomène peut engendrer, si celui-ci est intense et répétitif, des effets destructifs.

D'une manière générale, le terme de « cliquetis » utilisé ici peut désigner une auto-inflammation non désirée comme dans le cas des moteurs à allumage commandé, ou désirée comme dans les moteurs Diesel ou les moteurs ayant des phases de combustion à auto allumage contrôlé sans étincelle.

On connaît des systèmes pour la détection du cliquetis qui fonctionne sur le principe de la mesure accélérométrique ou de la mesure d'ionisation. Mais ces système n'apportent pas de réponse sur le lieu précis de l'apparition du cliquetis.

On connaît également par les publications SAE 950681 et SAE 2000-01-0252 différentes méthodes de localisation du cliquetis à l'aide de capteurs optiques.

Or, pour des besoins de recherche et de mise au point sur des moteurs, en particulier à allumage commandé, il est nécessaire d'être en mesure de déterminer la zone d'apparition du cliquetis afin d'étudier les facteurs géométriques influents et leur couplage avec les paramètres de réglage de la combustion. Ceci peut permettre d'optimiser la conception des chambres de combustion et l'utilisation des paramètres de réglage afin de retarder au maximum l'apparition du cliquetis et de tirer le meilleur parti de l'énergie apportée par la combustion du mélange air-carburant dans les phases de fonctionnement où le cliquetis risque de se produire, c'est à dire principalement à forte charge. Une optimisation du moteur vis à vis du cliquetis peut aussi avoir des conséquences favorables à faible charge, en permettant par exemple l'utilisation d'un taux de compression plus élevé qui entraîne un meilleur rendement de la combustion.

Dans le cas des moteurs Diesel et à auto allumage contrôlé, la localisation du point d'allumage peut permettre de mieux optimiser la combustion et le fonctionnement du moteur.

Ainsi, la présente invention concerne une méthode de localisation de la source d'une auto inflammation à fort gradient, principalement un cliquetis, apparaissant dans une chambre de combustion d'un moteur. Selon la méthode, on effectue les étapes suivantes :

- on dispose plusieurs capteurs de pression dans la chambre de combustion,
- on enregistre les ondes de pression reçues par les capteurs,
- on détermine la vitesse de propagation des ondes de pression dans la chambre,
- on mesure le décalage temporel d'arrivée de l'onde de pression entre les capteurs,
- on détermine les différences de distances entre la source du cliquetis et les différents capteurs, et on en déduit la localisation spatiale de la source de cliquetis dans la chambre.

On peut placer les capteurs de pression dans le plan joint de la culasse.

Au moins un des capteurs peut être hors du plan défini par les autres capteurs.

Dans le cas où l'apparition du cliquetis est situé dans un plan connu, on peut utiliser trois capteurs.

De préférence, on peut utiliser au moins quatre capteurs.

La méthode selon l'invention peut s'appliquer à la localisation du point d'allumage dans le cas d'autres types de combustion, telles que combustion par compression de la charge de type Diesel, homogène ou hétérogène, ou combustion par auto-allumage contrôlé, par exemple par la présence contrôlée d'un taux important de gaz brûlé dans la chambre issu du cycle précédent.

La présente invention sera mieux comprise et ses avantages apparaîtront plus clairement à la lecture des exemples suivants, nullement limitatifs, illustrés par les figures ci-après annexées, parmi lesquelles :

- Les figures 1a, 1b et 1c illustrent l'enregistrement et le traitement des ondes de pression mesurées.

- La figure 2 représente schématiquement le positionnement des capteurs dans la chambre de combustion.

Le principe de localisation proposé est basé sur un procédé goniométrique. Il s'appuie sur des mesures d'un des paramètres relatif à la combustion dans la chambre, par exemple la pression à l'aide de plusieurs capteurs (au moins quatre pour avoir une précision de localisation acceptable dans l'espace de la chambre, au moins trois si on limite la localisation à un plan prédéterminé) répartis en différents endroits de la chambre de combustion.

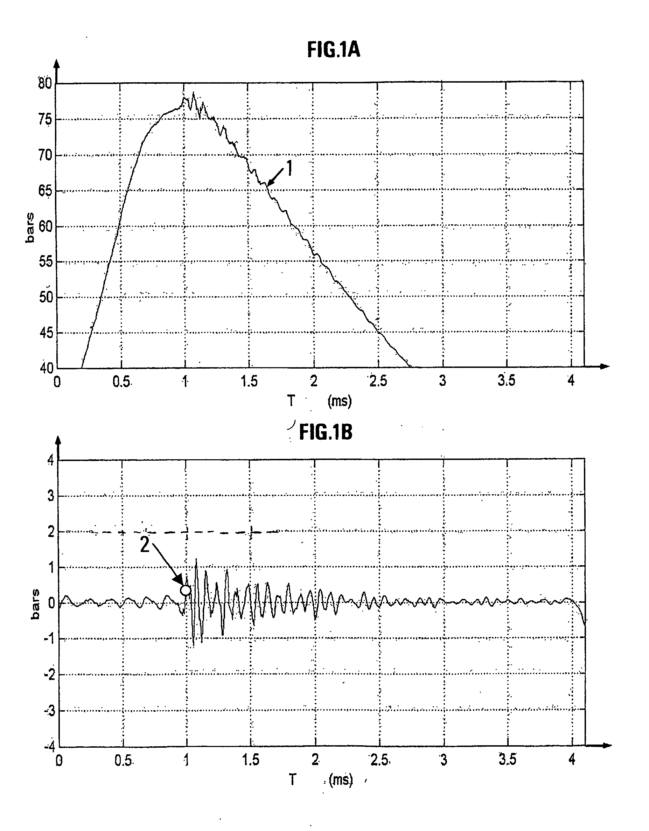

Le graphe de la figure 1a montre un signal 1 enregistré par un des capteurs de pression (en abscisse : le temps en milli seconde ; et en ordonnée : la pression en bar).

A partir de ces mesures d'ondes de pression acquises à haute fréquence et de manière simultanée, on détermine l'instant 2 d'arrivée de l'onde générée par le cliquetis sur chaque capteur, au moyen par exemple, d'une méthode par seuil sur le signal de pression. Ce signal est de préférence filtré, par exemple en retirant les composantes basse fréquence, par exemple < 3 kHz, et haute fréquence, par exemple >50 kHz, pour ne conserver que la zone fréquentielle correspondant à l'onde de cliquetis (représentation de la figure 1b).

On détermine en parallèle la vitesse de propagation moyenne (célérité C) des ondes de pression dans la chambre au moyen d'un calcul simplifié, par exemple à partir d'une mesure de la pression à l'instant d'apparition du cliquetis sur un capteur de référence

$$C = \gamma \times r \times T \; ;$$

avec $T$ = Pression$\times$Volume/masse admise/$r$, où $\gamma$ est déterminé par une loi simplifié en fonction de la température $T$.

On peut aussi déterminer la célérité à partir des fréquences propres du signal de cliquetis déterminées par une analyse FFT (Fast Fourier Transformation) du signal enregistré sur un capteur de référence :

$$C = F_n \times D / \alpha_n,$$

où $F_n$ est la fréquence mesurée correspondant à un mode propre de vibration, $D$ le diamètre du cylindre et $\alpha_n$ le coefficient calculé relatif à ce mode de vibration. Pour une chambre de forme simple, proche d'un cylindre de révolution, les coefficients $\alpha_n$ pourront provenir des coefficients de Bessel.

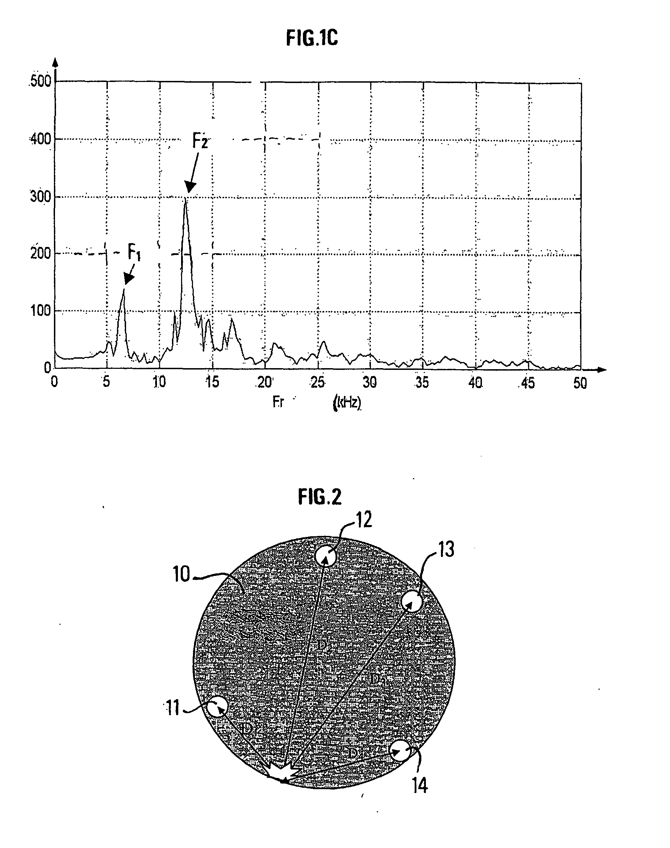

La figure 1c montre le résultat du traitement FFT sur le signal enregistré 1, F1 et F2 désignant les fréquences propres des deux premiers modes.

La figure 2 montre le principe d'installation de quatre capteurs de pression 11, 12, 13, 14 en relation avec une chambre de combustion 10. Ces quatre capteurs peuvent être disposés sur un même plan, par exemple le plan de joint de la culasse. Dans une autre variante, au moins un des capteurs est situé hors du plan défini par les trois autres. Dans une autre variante, le dispositif comprend au moins cinq capteurs.

On déduit du décalage temporel de l'arrivée de l'onde de pression entre les différents capteurs et de la célérité, la différence entre les distances D émetteur - récepteur (source du cliquetis - capteur) pour les différents capteurs, soit e1=D1-D2, e2=D1-D3 et e3=D1-D4. On est alors à même de déterminer l'origine du cliquetis dans la chambre de combustion par une méthode de triangulation qui consiste à déterminer le point d'intersection des trois hyperboloïdes de révolution ayant pour foyer les capteurs (D1, D2 ; D1, D3 ; D1, D4) et comme paramètres respectivement les écarts e1, e2, et e3.

La précision de la reconstruction augmentera nettement en multipliant le nombre de capteurs, en déterminant avec précision leur temps de réponse et en augmentant la résolution temporelle de l'acquisition.

On notera que l'efficacité et la précision de la méthode seront d'autant meilleures si l'invention s'applique dans des cas où le démarrage de la combustion à localiser génère un gradient de pression relativement important.

**Revendications**

1. Méthode de localisation de la source d'une auto inflammation de type cliquetis apparaissant dans une chambre de combustion d'un moteur, **caractérisée en ce que** l'on effectue les étapes suivantes :

   - on dispose plusieurs capteurs de pression dans ladite chambre de combustion,
   - on enregistre les ondes de pression reçues par lesdits capteurs,
   - on détermine la vitesse de propagation des ondes de pression dans la chambre,
   - on mesure le décalage temporel d'arrivée de l'onde de pression entre les capteurs,
   - on détermine les différences de distances entre la source du cliquetis et les différents capteurs, et on en déduit la localisation spatiale de la source de cliquetis dans la chambre.

2. Méthode selon la revendication 1, dans lequel on place lesdits capteurs de pression dans le plan joint de la culasse.

3. Méthode selon l'une des revendications précédentes, dans lequel au moins un des capteurs est hors du plan défini par les autres capteurs.

4. Méthode selon l'une des revendications précédentes, dans laquelle on utilise trois capteurs dans le cas où l'apparition du cliquetis se situe dans un plan connu.

5. Méthode selon l'une des revendications précédentes, dans laquelle on utilise au moins quatre capteurs.

6. Application de la méthode selon l'une des revendications 1 à 5, à un moteur à combustion à allumage commandé.

7. Application de la méthode selon l'une des revendications 1 à 5, à un moteur à combustion par compression de la charge de type Diesel, homogène ou hétérogène pour déterminer la localisation du point d'auto-inflammation.

8. Application de la méthode selon l'une des revendications 1 à 5, à un moteur à combustion par auto-allumage contrôlé pour déterminer la localisation du point d'auto-inflammation.

## Claims

1. A method of locating the source of a knock type self-ignition in a combustion chamber of an engine, **characterized in that** the following stages are carried out:

   - arranging several pressure detectors in said combustion chamber,
   - recording the pressure waves received by said detectors,
   - determining the velocity of propagation of the pressure waves in the chamber,
   - measuring the pressure wave arrival lag between the detectors,
   - determining the distance differences between the knock source and the various detectors, and deducing therefrom the spatial location of the knock source in the chamber.

2. A method as claimed in claim 1, wherein said pressure detectors are arranged in the joint plane of the cylinder head.

3. A method as claimed in any one of the previous claims, wherein at least one of the detectors is outside the plane defined by the other detectors.

4. A method as claimed in any one of the previous claims, wherein three detectors are used in cases where the knock appearance occurs in a known plane.

5. A method as claimed in any one of the previous claims, wherein at least four detectors are used.

6. Application of the method as claimed in any one of claims 1 to 5 to a spargignition combustion engine.

7. Application of the method as claimed in any one of claims 1 to 5 to a homogeneous or heterogeneous diesel type charge compression combustion engine for determining the location of the self-ignition point.

8. Application of the method as claimed in any one of claims 1 to 5 to a controlled self-ignition combustion engine for determining the location of the self-ignition point.

## Patentansprüche

1. Verfahren zum Lokalisieren der Quelle einer Selbstzündung des Typs Klopfen, das in einer Brennkammer eines Motors auftritt, **dadurch gekennzeichnet, dass** man die folgenden Schritte durchführt:

   - man ordnet mehrere Drucksensoren in der Brennkammer an,
   - man zeichnet die von den Sensoren empfangenen Druckwellen auf,
   - man bestimmt die Ausbreitungsgeschwindigkeit der Druckwellen in der Kammer,
   - man misst den zeitlichen Versatz des Eintreffens der Druckwelle zwischen den Sensoren,
   - man bestimmt die Entfernungsunterschiede zwischen der Quelle des Klopfens und den verschiedenen Sensoren, und man leitet davon die räumliche Lage der Klopfquelle in der Kammer ab.

2. Verfahren nach Anspruch 1, bei dem man die Drucksensoren in der Ebene der Zylinderkopfdichtung platziert.

3. Verfahren nach einem der vorhergehenden Ansprüche, bei dem mindestens einer der Sensoren außerhalb der Ebene liegt, die von den anderen Sensoren definiert ist.

4. Verfahren nach einem der vorhergehenden Ansprüche, bei dem man drei Sensoren in dem Fall verwendet, in dem das Auftreten des Klopfens in einer bekannten Ebene liegt.

5. Verfahren nach einem der vorhergehenden Ansprüche, bei dem man mindestens vier Sensoren verwendet.

6. Anwenden des Verfahrens nach einem der Ansprüche 1 bis 5 auf einen Verbrennungsmotor mit gesteuerter Zündung.

7. Anwenden des Verfahrens nach einem der Ansprüche 1 bis 5 auf einen Verbrennungsmotor mit Ladekompression des Typs Diesel, homogen oder heterogen, um die Lage des Selbstzündungspunkts zu bestimmen.

8. Anwenden des Verfahrens nach einem der Ansprüche 1 bis 5 auf einen Verbrennungsmotor mit gesteuertem Selbstzünden, um die Lage des Selbstzündungspunkts zu bestimmen.

**FIG.1A**

**FIG.1B**

## FIG.1C

## FIG.2